# EUROPÄISCHE PATENTANMELDUNG

(11) **EP 0 535 524 A1**
(43) Veröffentlichungstag der Anmeldung: **07.04.1993**
(21) Anmeldenummer: 92116298.8
(22) Anmeldetag: 23.09.1992
(51) Int. Cl.: F16L 27/12, E03C 1/02

(54) **Passstück zum Einbau in Rohrleitungen**

(30) Priorität: 24.09.1991 DE 9111927 U
(71) Anmelder: RAFELD KUNSTSTOFFTECHNIK GmbH & Co. KG, 87640 Ebenhofen (DE)
(72) Erfinder: RAFELD KUNSTSTOFFTECHNIK GmbH & Co. KG, 87640 Ebenhofen (DE)
(74) Vertreter: Kern, Wolfgang, Dipl.-Ing.

(57) **Zusammenfassung**

Die Erfindung betrifft ein Paßstück zum Einbau in Rohrleitungen und/oder zum Anschließen von Armaturen, Fittings o.dgl. für den Sanitär- und Heizungsbereich, bei dem ein Ende als Innengewindeabschnitt zum Aufnehmen der Rohrleitung, Armatur o.dgl. ausgebildet ist.

Ein solchens Paßstück soll so gestaltet werden, daß seine Montage verbessert wird.

Dies wird erreicht durch einen zumindest ein Muffenstück (2) aufweisenden Rohrverbindungsmuffenkörper (4) und einen länglichen, rohrförmigen Ausgleichskörper (14), dessen eines Ende (15) den Innengewindeabschnitt (3) aufweist und dessen anderes Ende (16) abdichtend mit dem Muffenstück (2) des Rohrverbindungsmuffenkörpers (4) verbindbar ist.

## Beschreibung

Die Erfindung bezieht sich auf ein Paßstück zum Einbau in Rohrleitungen nach dem Oberbegriff des Anspruchs 1.

Ein solches Paßstück ist aus der Praxis bekannt. Bei diesem Paßstück ist das Muffenstück einstückig mit dem Innengewindeabschnitt verbunden. Die Länge des Innengewindeabschnitts ist beträchtlich größer als die Länge des Muffenstücks. Bei der Montage des bekannten Paßstückes wird zum Einbau desselben in eine Rohrleitung oder zum Anschließen von Armaturen, Fittings u. dgl. der Innengewindeabschnitt auf die gewünschte Länge gekürzt. Dazu wird üblicherweise ein Teil des Innengewindeabschnitts von dem Paßstück abgesägt. Dabei läßt sich ein Beschädigen des Innengewindes und der verchromten Oberfläche des Paßstücks nicht immer vermeiden, so daß eine Nachbearbeitung des Innengewindeabschnitts erforderlich sein kann. Ein Beschädigen der Oberfläche kann außerdem zu Korrosionsschäden des Paßstücks führen.

Der Erfindung liegt die Aufgabe zugrunde, ein Paßstück der eingangs erwähnten Art zu schaffen, dessen Montage verbessert ist.

Diese Aufgabe wird erfindungsgemäß bei einem Paßstück der eingangs erwähnten Art durch die kennzeichnenden Merkmale des Anspruchs 1 gelöst.

Erfindungsgemäß weist das Paßstück zwei zunächst voneinander getrennte Teile, nämlich einen Rohrverbindungsmuffenkörper und einen Ausgleichskörper auf. Vorteilhaft ist dabei, daß lediglich ein Teil des Ausgleichskörpers als Innengewindeabschnitt ausgebildet ist, so daß das dem Innengewindeabschnitt gegenüberliegende Ende des Ausgleichskörpers unproblematisch bearbeitet werden kann, ohne daß die Gefahr einer Beschädigung des Innengewindeabschnittes besteht. Ein weiterer Vorteil der Erfindung besteht darin, daß der Ausgleichskörper mit anderen Fittings ohne Gewindeabschnitt auf einfache Weise zu Gewindefittings langer Ausführung kombiniert werden kann. Zum abdichtenden Verbinden von Ausgleichskörper und Rohrverbindungsmuffenkörper kann ersterer mit letzterem beispielsweise verschweißt werden.

Vorteilhafterweise hat das wenigstens eine Muffenstück des Rohrverbindungsmuffenkörpers eine Bohrung mit zum freien Ende des Muffenstücks hin stetig zunehmendem Innendurchmesser. Dadurch ist der dem Innengewindeabschnitt gegenüberliegende Teil des Ausgleichskörpers ohne weiteres in das Muffenstück einsteckbar, ohne daß eine überaus genaue Anpassung des Innendurchmessers des Muffenstücks an den Außendurchmesser des Ausgleichskörpers notwendig ist. Die kegelstumpfartige Ausbildung des Muffenstücks verbessert ferner die Haltbarkeit der Verbindung zwischen Ausgleichskörper und Muffenstück, insbesondere bei einem gegenseitigen Verschweißen dieser Teile.

Gemäß einer Weiterbildung des Erfindungsgegenstandes ist der Rohrverbindungsmuffenkörper winkelig ausgebildet und mittels einer einstückig damit verbundenen Halteplatte an einer Wand befestigbar. Damit ist eine sogenannte Vorwandmontage vor Ort möglich.

Günstig ist ferner, daß der Ausgleichskörper einen einstückig mit dem Innengewindeabschnitt verbundenen Hülsenabschnitt aufweist, dessen Länge vorzugsweise größer als diejenige des Innengewindeabschnitts ist. Die Länge eines solchen Hülsenabschnitts ist beispielsweise durch Absägen ohne weiteres zu verringern, ohne daß es dazu eines besonders ausgebildeten Personals und großer Sorgfalt bedarf.

Vorteilhafterweise sind der Innendurchmesser am freien Ende des Muffenstücks und der Außendurchmesser des Hülsenabschnitts derart festgelegt, daß der Hülsenabschnitt in das Muffenstück einsteckbar und mit diesem verschweißbar ist. Dadurch entfällt eine sorgfältige Bearbeitung des Hülsenabschnitts, insbesondere in dem Teil, der in das Muffenstück eingesteckt werden soll. Ein Beschädigen der Oberfläche durch Absägen eines Teils des Hülsenabschnitts kann in der Regel nicht zu Korrosionsschäden führen, da üblicherweise gerade das bearbeitete Ende des Ausgleichskörpers in das Muffenstück eingesteckt und mit diesem verschweißt wird.

Gemäß einer Weiterbildung des Paßstücks ist die Länge des Hülsenabschnitts wesentlich größer als die Länge des Muffenstücks, so daß die gesamte Länge des Ausgleichskörpers in weiten Grenzen variierbar ist.

Günstig ist ferner, daß der Hülsenabschnitt eine Bohrung mit zu seinem freien Ende hin stetig zunehmendem Innendurchmesser hat, wobei die Neigung der Innenwand des Hülsenabschnitts zur Längsachse des Ausgleichskörpers vorzugsweise 1° beträgt. Dadurch hat der Hülsenabschnitt im Bereich seines freien Endes eine geringere Wandstärke als an seinem mit dem Innengewindeabschnitt verbundenen Ende, so daß ein Absägen eines Teils des Hülsenabschnitts im Bereich der verminderten Wandstärke erleichtert ist.

Vorteilhafterweise sind am Umfang des Hülsenabschnitts des Ausgleichskörpers Markierungen vorgesehen, deren gegenseitiger Abstand vorzugsweise 10 mm beträgt. Diese Markierungen erleichtern die Längenberechnung des Ausgleichskörpers und damit des gesamten Paßstücks, so daß es weniger leicht zu fertig installierten Paßstücken kommen kann, deren Wandabstand bzw. Länge in unzulässiger Weise von einem vorbestimmten Wert abweicht.

Ein Ausführungsbeispiel des Erfindungsgegenstandes wird nachfolgend an Hand der Zeichnung näher erläutert.
Es zeigen:
- Fig. 1: einen teilweisen Längsschnitt durch ein Paßstück zum Einbau in Rohrleitungen und/oder zum Anschließen von Armaturen, Fittings u.dgl., bestehend aus einem Rohrverbindungsmuffenkörper und einem Ausgleichskörper;
- Fig. 2: eine Seitenansicht des Rohrverbindungsmuffenkörpers von Fig. 1;
- Fig. 3: einen Längsschnitt entlang der Linie III-III in Fig. 2;
- Fig. 4: einen teilweisen Längsschnitt durch den Ausgleichskörper von Fig. 1; und
- Fig. 5: eine Stirnansicht des Ausgleichskörpers in Fig. 4 von rechts gesehen.

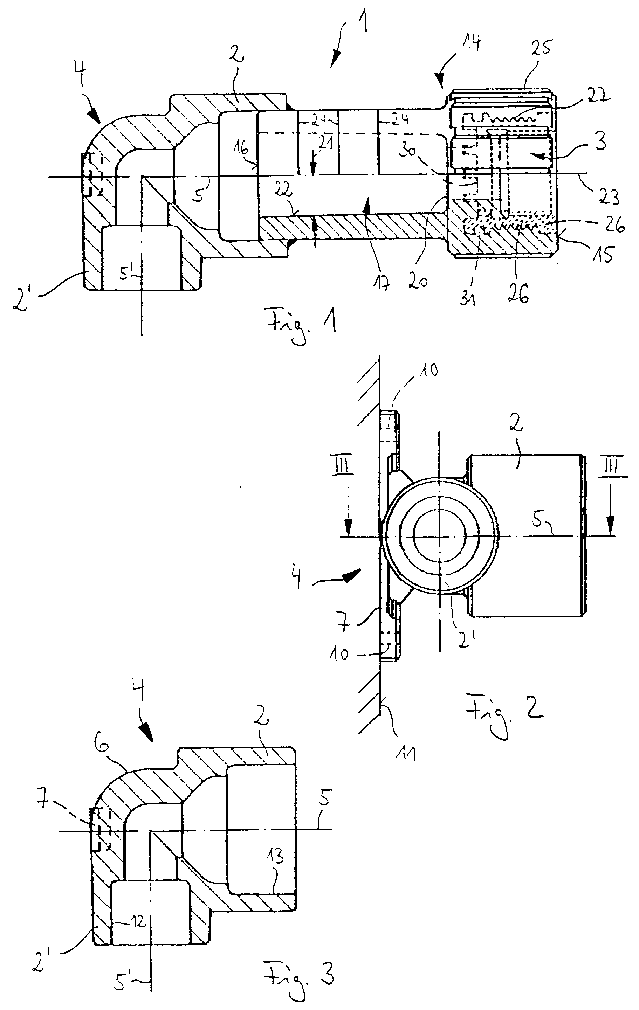

Ein teilweiser Längsschnitt durch ein erfindungsgemäßes Paßstück 1 zum Einbau in Rohrleitungen und/oder zum Anschließen von Armaturen, Fittings u. dgl. für den Sanitär- und Heizungsbereich ist fertig montiert in Fig. 1 dargestellt. Das Paßstück ist derart ausgebildet, daß seine Gesamtlänge vor dem Zusammenbau an ein gewünschtes Maß anpaßbar ist, wie nachfolgend noch genauer beschrieben wird.

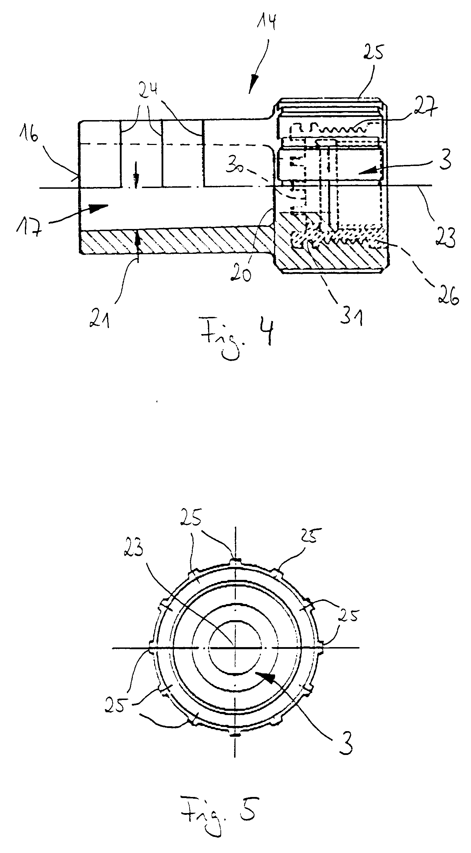

Gemäß Fig. 1 ist das eine Ende des Paßstücks 1 als Muffenstück 2'und das andere Ende als Innengewindeabschnitt 3 ausgebildet. Der genaue Aufbau des Paßstücks 1 ist in den Fig. 2 bis 5 dargestellt.

Das Paßstück 1 weist danach einen Rohrverbindungsmuffenkörper 4 auf, der gemäß den Fig. 2 und 3 zwei Muffenstücke 2, 2' umfaßt, deren Längsachsen 5, 5' sich unter einem Winkel von 90° schneiden. Damit ist der Rohrverbindungsmuffenkörper 4 als Bogen- oder Kniestück ausgebildet.

Gemäß der in Fig. 2 dargestellten Seitenansicht des Rohrverbindungsmuffenkörpers 4 umfaßt dieser im Bereich seines Bogenstücks 6 (vgl. den Längsschnitt entlang der Linie III-III in Fig. 2, dargestellt in Fig. 3) eine einstückig damit verbundene Halteplatte 7, an deren freien Enden jeweils eine Bohrung 10 vorgesehen ist. Gemäß den Fig. 2 und 3 liegen die Bohrungen 10 in einer die Längsachse 5 des Rohrverbindungsmuffenkörpers 4 vertikal schneidenden Ebene (nicht dargestellt). Die Bohrungen 10 dienen zur Aufnahme von nicht gezeigten Befestigungsmitteln, wie z.B. Schrauben, mit deren Hilfe die Halteplatte und damit der Rohrverbindungsmuffenkörper an einer schematisch in Fig. 2 angedeuteten Wand 11 befestigbar ist.

Gemäß Fig. 2 und 3 hat jedes Muffenstück 2, 2' des Rohrverbindungsmuffenkörpers eine Bohrung 12, 13, wobei der Innendurchmesser der Bohrung 12 kleiner als derjenige der Bohrung 13 ist. Die Bohrungen 12, 13 sind kegelstumpfartig mit zum freien Ende des Muffenstücks 2, 2' hin stetig zunehmendem Innendurchmesser ausgebildet. Die Neigung der jeweiligen Innenwand des Muffenstücks zu ihrer Längsachse 5, 5' beträgt nur wenige Grad und ist der Einfachheit halber in den Fig. 1 und 3 nicht gezeigt.

Neben dem Rohrverbindungsmuffenkörper 4 weist das Paßstück 1 ferner einen länglichen, rohrförmigen Ausgleichskörper 14 auf, dessen eines, in den Fig. 1 und 4 rechtes Ende 15 den Innengewindeabschnitt 3 enthält und dessen anderes, in den Fig. 1 und 4 linkes Ende 16 abdichtend mit dem Muffenstück 2 des Rohrverbindungsmuffenkörpers 4 verbindbar ist.

Der Ausgleichskörper 14 weist einen einstückig mit dem Innengewindeabschnitt 3 verbundenen Hülsenabschnitt 17 auf, dessen Länge gemäß den Fig. 1 und 4 größer als diejenige des Innengewindeabschnitts 3 ist. Gemäß Fig. 1 sind der Innendurchmesser am freien Ende des in Fig. 1 rechts dargestellten Muffenstücks 2 und der Außendurchmesser des Hülsenabschnitts 17 derart aneinander angepaßt, daß der Hülsenabschnitt 17 in das rechte Muffenstück 2 einsteckbar und mit diesem, wie in Fig. 1 angedeutet, verschweißbar ist.

Um die Gesamtlänge des Ausgleichskörpers 14 in weiten Bereichen verändern zu können, ist die Länge des Hülsenabschnitts 17 wesentlich größer als die Länge des Muffenstücks 2. Damit ist sichergestellt, daß der Hülsenabschnitt 17 auch bei vollständig in das Muffenstück 2 eingestecktem Ausgleichskörper das Ende des Muffenstücks überragt, so daß ein Verschweißen von Muffenstück und Ausgleichskörper unproblematisch möglich ist. Gemäß Fig. 1 ist es aber auch möglich, den Hülsenabschnitt 17 nur teilweise in das Muffenstück 2 einzuschieben und die vorgenannten Teile anschließend miteinander zu verschweißen. Damit kann die Gesamtlänge des Paßstücks noch vergrößert werden.

Gemäß den Fig. 1 und 4 hat der Hülsenabschnitt 17 eine Bohrung 20 mit zu seinem linken (freien) Ende 16 hin stetig zunehmendem Innendurchmesser. Die Neigung 21 der Innenwand 22 des Hülsenabschnitts 17 zur Längsachse 23 des Ausgleichskörpers 14 beträgt wenige Grad, vorzugsweise 1°.

Am Umfang des Hülsenabschnitts 17 des Ausgleichskörpers 14 sind Markierungen 24 vorgesehen, deren gegenseitiger Abstand vorzugsweise 10 mm beträgt. Die Markierungen können als Ringnuten ausgebildet sein. Es ist ferner möglich, mittels dieser nicht dargestellten Ringnuten die Wandstärke des Hülsenabschnitts 17 so zu schwächen, daß im Bereich der Markierungen 24 Sollbruchstellen entstehen, so daß die Länge des Hülsenabschnitts 17 durch Abbrechen oder Absägen des überschüssigen Teils leicht und schnell verändert werden kann.

Der Innengewindeabschnitt 3 trägt an seiner Außenfläche über den Umfang verteilte Vorsprünge 25 (vgl. insbesondere Fig. 5), so daß der Ausgleichskörper 14 zum Einschrauben eines Rohrendes oder einer Armatur, etc. in den Innengewindeabschnitt 3 ohne Verrutschen festgehalten werden kann.

Vorzugsweise besteht der Ausgleichskörper 14 aus Kunststoff, insbesondere Propylen, und enthält eine metallene Gewindehülse 26, die mit dem genannten Kunststoff beispielsweise durch Umspritzen oder Umgießen fest verbunden ist. Die metallene Gewindehülse 26 ist ein Drehkörper mit zylindrischem Umriß, der zum Verhindern von Leckageströmen auf einem Teil seiner zylindrischen Oberfläche mit umlaufenden Dichtungsrillen 27 versehen ist, in die das Kunststoffmaterial beim Umspritzen oder Umgießen der Gewindehülse eingetreten ist. Die Dichtungsrillen 27 sind derart ausgebildet, daß die beim Abkühlen des Kunststoffmaterials auftretenden Spannungen nicht dazu führen können, daß sich das Kunststoffmaterial aus diesen Rillen löst.

Der Boden der Gewindehülse 26 ist mit Vorsprüngen bzw. Rücksprüngen 30 in der Oberfläche der Bodenaußenseite versehen, so daß die Gewindehülse 26 drehfest in dem Innengewindeabschnitt 3 gehalten ist. Beim Umspritzen oder Umgießen der Gewindehülse dringt das Kunststoffmaterial demnach in die Vor-/Rücksprünge 30 ein.

Zusätzlich ist im Bereich des Bodens der Gewindehülse 26 auf der zylindrischen Außenfläche eine umlaufende Ringnut 31 vorgesehen, in die das Kunststoffmaterial beim Herstellen des Ausgleichskörpers 14 ebenfalls eindringt und mit deren Hilfe verhindert werden soll, daß die Gewindehülse 26 beim Auftreten von nach außen gerichteten Normalkräften aus dem Innengewindeabschnitt 3 herausgezogen wird.

Der Rohrverbindungsmuffenkörper kann auch gerade, kreuzförmig oder als T-Stück ausgebildet sein. Wichtig ist lediglich, daß neben dem wenigstens einen Muffenstück ein weiteres Ansatzstück vorgesehen ist, mit dem der Rohrverbindungsmuffenkörper an eine Rohrleitung anschließbar ist. Der Ausgleichskörper kann auf vielfältige Art und Weise mit dem Rohrverbindungsmuffenkörper verbunden sein. Anstelle einer Schweißverbindung kann ebensogut ein Klappmechanismus, beispielsweise unter Verwendung einer Dichtung, verwendet werden. Es ist somit auch das Vorsehen einer lösbaren Verbindung nicht ausgeschlossen. Anstelle der einstückigen Ausbildung von Hülsensabschnitt und Innengewindeabschnitt kann auch eine Verbindung vorgesehen sein, bei der der Innengewindeabschnitt in der Art einer Überwurfmutter ausgebildet ist.

Das zuvor beschriebene Paßstück wird wie folgt zusammengebaut:
Zunächst wird die benötigte Gesamtlänge (Soll-Länge) des Paßstücks ermittelt. Anschließend wird der Ausgleichskörper mit seinem Ende 16 in das Muffenstück 2 des Rohrverbindungsmuffenkörpers so weit eingesteckt, bis die Gesamtlänge des zu installierenden Paßstücks der Soll-Länge entspricht. Die Länge des Ausgleichskörpers 14 kann durch Absägen eines oder mehrerer der außenliegenden Teile des Hülsenabschnitts 10 weiter verringert werden. Im zusammengesteckten Zustand werden Ausgleichskörper 14 und Rohrverbindungsmuffenkörper 4 fest miteinander, beispielsweise durch Schweißen, verbunden, so daß anschließend eine mit Außengewinde versehene Rohrleitung oder Armatur o. dgl. in den Innengewindeabschnitt 3 eingeschraubt werden kann. Vor dem Verbinden von Ausgleichskörper 14 und Rohrverbindungsmuffenkörper 4 kann letzterer mit Hilfe des Muffenstücks 2' fest mit einer nicht dargestellten Rohrleitung verbunden werden. Es ist aber auch möglich, erst das gesamte Paßstück mit Hilfe des Muffenstücks 2' in eine Rohrleitung einzubauen.

Die Befestigung des Rohrverbindungsmuffenkörpers an einer Wand oder an einem Boden kann vor oder nach dem Verbinden des Ausgleichskörpers mit dem Rohrverbindungsmuffenkörper erfolgen.

Mit Hilfe des zuvor beschriebenen Paßstücks ist dessen Einbau in eine Rohrleitung stark vereinfacht. Eine Nachbearbeitung irgendeines Teils des Paßstücks ist nicht erforderlich.

## Patentansprüche

1. Paßstück zum Einbau in Rohrleitungen und/oder zum Anschließen von Armaturen, Fittings o. dgl. für den Sanitär- und Heizungsbereich, bei dem ein Ende als Innengewindeabschnitt zum Aufnehmen der Rohrleitung, Armatur o.dgl. ausgebildet ist, **gekennzeichnet** durch einen zumindest ein Muffenstück (2) aufweisenden Rohrverbindungsmuffenkörper (4) und
einen länglichen, rohrförmigen Ausgleichskörper (14), dessen eines Ende (15) den Innengewindeabschnitt (3) aufweist und dessen anderes Ende (16) abdichtend mit dem Muffenstück (2) des Rohrverbindungsmuffenkörpers (4) verbindbar ist.

2. Paßstück nach Anspruch 1, dadurch **gekennzeichnet,** daß das wenigstens eine Muffenstück (2) des Rohrverbindungsmuffenkörpers (4) eine Bohrung (13) mit zum freien Ende des Muffenstücks (2) hin stetig zunehmendem Innendurchmesser hat.

3. Paßstück nach Anspruch 1 oder 2, dadurch **gekennzeichnet,** daß der Rohrverbindungsmuffenkörper (4) winkelig ausgebildet und mittels einer einstückig damit verbundenen Halteplatte (7) an einer Wand (11) befestigbar ist.

4. Paßstück nach einem der Ansprüche 1 bis 3, dadurch **gekennzeichnet,** daß der Ausgleichskörper (14) einen einstückig mit dem Innengewindeabschnitt (3) verbundenen Hülsenabschnitt (17) aufweist, dessen Länge vorzugsweise größer als diejenige des Innengewindeabschnitts (3) ist.

5. Paßstück nach Anspruch 4, dadurch **gekennzeichnet,** daß der Innendurchmesser am freien Ende des Muffenstücks (2) und der Außendurchmesser des Hülsenabschnitts (17) derart festgelegt sind, daß der Hülsenabschnitt (17) in das Muffenstück (2) einsteckbar und mit diesem verschweißbar ist.

6. Paßstück nach Anspruch 4 oder 5, dadurch **gekennzeichnet,** daß die Länge des Hülsenabschnitts (17) wesentlich größer als die Länge des Muffenstücks (2) ist.

7. Paßstück nach einem der Ansprüche 4 bis 6, dadurch **gekennzeichnet,** daß der Hülsenabschnitt (17) eine Bohrung (20) mit zu seinem freien Ende hin stetig zunehmendem Innendurchmesser hat.

8. Paßstück nach Anspruch 7, dadurch **gekennzeichnet,** daß die Neigung (21) der Innenwand (22) des Hülsenabschnitts (17) zur Längsachse (23) des Ausgleichskörpers (14) 1° beträgt.

9. Paßstück nach einem der Ansprüche 4 bis 8, dadurch **gekennzeichnet,** daß am Umfang des Hülsenabschnitts (17) des Ausgleichskörpers (14) Markierungen (24) vorgesehen sind, deren gegenseitiger Abstand vorzugsweise 10 mm beträgt.
